Europäisches Patentamt

**European Patent Office**

**Office européen des brevets**

(19)

(11) Veröffentlichungsnummer: **0 049 371**
**A2**

(12) ## EUROPÄISCHE PATENTANMELDUNG

(21) Anmeldenummer: **81106939.2**

(22) Anmeldetag: **04.09.81**

(51) Int. Cl.³: **H 01 M 10/12**
**H 01 M 10/10**

(30) Priorität: **03.10.80 DE 8026535 U**

(43) Veröffentlichungstag der Anmeldung:
**14.04.82 Patentblatt 82/15**

(84) Benannte Vertragsstaaten:
**AT FR GB IT SE**

(71) Anmelder: **ACCUMULATORENFABRIK**
**SONNENSCHEIN GMBH**
**Postfach 1180**
**D-6470 Büdingen 1 (Oberhessen)(DE)**

(72) Erfinder: **Brinkhaus, Joachim**
**Kastanienring 10**
**D-6470 Büdingen 1(DE)**

(74) Vertreter: **Baumann, Eduard**
**Postfach 1201 Sattlerstrasse 1**
**D-8011 Höhenkirchen(DE)**

(54) **Wartungsfreier, elektrolyt- und gasdichter Bleiakkumulator.**

(57) Die Erfindung bezieht sich auf einen wartungsfreien, elektrolyt- und gasdichten Bleiakkumulator mit Elektrodengittern aus Feinblei, dispersionsgehärtetem Blei oder einer antimonfreien Bleilegierung sowie einem Elektrolyt aus einem thixotropen Gel, bestehend aus Schwefelsäure und einem Gelbildner, vorzugsweise Siliziumdioxyd, sowie vorzugsweise Phosphor,
bei dem zur Erzielung einer geringen Selbstentladung, einer langen Einsatzbereitschaft, einer Schnellaufladung bei geringen Gasungsverlusten und einer hohen mechanischen Stabilität auch bei extremen Temperaturunterschieden und hoher Dauer-Umgebungstemperatur der Plattenabstand (a) zwischen benachbarten positiven und negativen Platten 10 - 30 mm, vorzugsweise 13 - 16 mm, beträgt.

Fig.

EP 0 049 371 A2

Croydon Printing Company Ltd.

Die Erfindung bezieht sich auf einen wartungsfreien, elektrolyt- und gasdichten Bleiakkumulator nach dem Oberbegriff des Anspruches .

Derartige Bleiakkumulatoren enthalten anstatt eines flüssigen Elektrolyten aus Schwefelsäure einen gelförmigen Elektrolyten, was zweckmäßigerweise durch Zugabe von Silizimdioxid erfolgt.

Derartige Batterien sind in letzter Zeit technologisch auf einen hohen Stand gebracht worden. Beispielsweise wurde auch die Zyklenfestigkeit durch Zugabe von Phosphorsäure verbessert. Dabei ging die Tendenz dahin, die Abstände zwischen den Elektrodenplatten, dem Trägermaterial für die Aktivmassen, immer geringer zu machen, die Elektrodenplatten oder -gitter immer dünner zu machen, dagegen die Stabilität dieser Platten durch eigene elektrolytdurchlässige Separatoren oder Abstandshalter zu verbessern. Dadurch wird gleichzeitig die Gefahr einer mechanischen Berührung eng benachbarter Platten verhindert. Auf diese Weise konnte eine relativ hohe Akkumulatorenkapazität auf engem Raume untergebracht werden.

Es zeigten sich jedoch auch Nachteile dieser Entwicklungstendenz. Für bestimmte Anwendungsgebiete sind nämlich derartige Akkumulatoren ungeeignet, beispielsweise für abgelegene Gebiete mit starken Temperaturunterschieden oder einer hohen Dauer-Umgebungstemperatur, beispielsweise im Polargebiet, oder in trockenen Wüstengebieten.

Es zeigte sich insbesondere, daß die Lebensdauer derartiger Akkumulatoren bei höheren Dauertemperaturen deutlich absinkt. Desgleichen sind negative Auswirkungen auf die Tiefentladesicherheit, das heißt die Entladungsmöglichkeit bei geringer verbleibender Restsäure, und den Ladungswirkungsgrad festgestellt worden. Bei erhöhter Temperatur und bei starken Temperaturunterschieden bestand auch die Gefahr einer Verwerfung der Akkumulatorengitter und damit einer Beeinträchtigung des Betriebes, teilweise kam es sogar zu Kurzschlüssen zwischen benachbarten Gittern.

Für bestimmte Einsatzgebiete wird außer einer hohen Zyklenfestigkeit und Wartungsfreiheit eine hohe Dauertemperaturfestigkeit vom etwa 50°C, eine geringe Selbstentladung, eine große Tiefentladesicherheit sowie ein guter Ladungswirkungsgrad gefordert, wobei ein derartiger Akkumulator in drei Stunden wieder auf 80 % seiner Leistung aufgeladen sein muß. Ein derartiger Akkumulator muß bei Einsatzbedingungen von -30°C bis +60°C einsatzbereit sein. Um dem Abbau des Elektrolytgels bei höheren Temperaturen entgegenzuwirken, wurde bereits vorgeschlagen, oberhalb der Platten ein Reservevolumen an Elektrolyt vorzusehen.

Bei wartungsfreiem Betrieb eines Akkumulators mit flüssiger Säure treten Säureschichtungen auf, was bei gelhaltigen Elektrolyten unterbleibt. Der gelhaltige Elektrolyt ist nach seiner Erstarrung nicht mehr befähigt, in den säureverarmten Raum zwischen den Platten hineinzufließen, wenn sich ein Teil des dort befindlichen Gels umgesetzt hat.

Darüber hinaus konnten auch dadurch nicht die Nachteile einer zu großen Selbstentladung und der Berührungsgefahr benachbarter Platten behoben werden.

Der Erfindung liegt die Aufgabe zugrunde, einen wartungsfreien, elektrolyt- und gasdichten Bleiakkumulator nach dem Oberbegriff des Anspruches 1 so auszubilden, daß auch bei extremen Temperaturunterschieden und hoher Dauer-Umgebungstemperatur eine geringe Selbstentladung, eine lange Einsatzbereitschaft, eine Schnellaufladung bei geringen Gasungsverlusten und eine hohe mechanische Stabilität erreicht wird.

- 4 -

Die Aufgabe wird erfindungsgemäß durch die Merkmale des
Kennzeichens des Anspruches gelöst.

Die erstaunlich einfache Lösung der Aufgabe, die der
allgemeinen Tendenz, alles kompakter und kleiner zu
machen, direkt entgegengesetzt ist, ermöglicht gleichzeitig die Behebung sämtlicher vorher angeführter Nachteile. Der Plattenabstand nach dem Erfindungsgegenstand
ist mit 10 bis 30 mm, vorzugsweise 13 bis 16 mm, etwa
doppelt so groß als bei herkömmlichen Batterien, die
nach dem Oberbegriff des Anspruches 1 ausgebildet waren.
Die Wirkungen waren für den Fachmann überraschend und
nicht vorhersehbar.

Der erste günstige Einfluß auf die Ergebnisse besteht
in einem erheblich vergrößerten Elektrolytvolumen. Dies
allein führt schon zu einer größeren Langzeitstabilität,
da die Elektrolytverluste weniger kritisch sind. Das
größere Elektrolytvolumen bewirkt einen wesentlich geringeren
Säuredichteunterschied zwischen geladenem und entladenem
Akkumulator. Dies ermöglicht eine größere Tiefentladesicherheit und verhindert ein Ausfrieren des Elektrolyten
und die damit einhergehende Zerstörung der Platten bei
tiefen Temperaturen. Die mögliche niedrige Säuredichte
senkt die Gegenspannung beim Laden. Die Platten polarisieren nicht so schnell, die Batterie kann mit relativ
hohen Ladestromdichten mit hohem Ladewirkungsgrad geladen werden. Die größere Elektrolytmenge ermöglicht also
auch ein weniger problematisches und zeitlich schnelleres
Aufladen und die Zufuhr höherer Ladeströme. Gleichzeitig
werden die Gasungsverluste verringert.

Durch den größeren Plattenabstand, d.h. die Notwendigkeit,
für Fremdionen breitere Elektrolytschichten überwinden zu
müssen, wird überraschenderweise auch die bekannt niedrige
Selbstentladung des antimonfreien Blei-Schwefelsäure-Akkumulators im Laufe der Zeit zusätzlich verringert.

Es ist auch nicht mehr notwendig, oberhalb der Platten eine
Reserve an Elektrolyt vorzusehen. Um den dafür vorgesehenen
Raum wird das Elektrolytvolumen in der Höhe reduziert.

Die größeren Plattenabstände ermöglichen eine größere
Plattendicke, da deren Gewicht im Vergleich zum Gesamtgewicht keine so große Rolle mehr spielt. Dickere Elektrodenplatten haben jedoch eine größere Aufnahmekapazität
für die Aktivmassen. Die Gesamtkapazität des Akkumulators
wird durch die geringere Anzahl von Elektrodenplatten in
einem Akkumulator gemäß der Erfindung somit nicht so
stark verringert, wie es an sich zu erwarten gewesen
wäre. Dickere Platten haben außerdem den Vorteil der
Erhöhung der Zyklendauer. Größere Plattenabstände machen geringfügige Toleranzabweichungen nicht mehr so kritisch, wie
es bei geringeren Plattenabständen der Fall war. Das verbilligt die Herstellung und die Montage derartiger
Akkumulatorenplatten. Dickere Platten sind auch mechanisch
stabiler; aus diesem Grunde kann sogar u.U. auf die
üblichen Separatoren verzichtet werden oder die Anzahl
derartiger Separatoren bzw. der Volumen- und Gewichtsanteil derartiger Separatoren verringert werden.

Durch die überraschend einfache Lösung nach dem Gegenstand
der Erfindung, welche der allgemeinen Entwicklungstendenz
und damit den allgemeinen Vorstellungen der Fachwelt zuwiderläuft, war es somit möglich, Akkumulatoren zu erzeugen, die für bestimmte extreme Einsatzbedingungen geeignet
sind. Derartige Akkumulatoren können beispielsweise in
abgelegenen Gegenden durch Solarzellen, durch Windturbinen,
durch Wasserturbinen oder ähnliches aufgeladen werden.

Unterschreitet man den unteren Wert des Abstandes, so
ergeben sich die in der Beschreibungseinleitung angeführten
Nachteile, so daß ein Betrieb unter den geschilderten
extremen Einsatzbedingungen nicht möglich ist. Überschrei-

tet : man die oberen angegebenen Werte, d.h. geht man
merklich über einen Elektrodenabstand von 30 mm hinaus,
so wird der Elektrolytwiderstand so vergrößert, daß keine
befriedigenden elektrischen Eigenschaften des Akkumulators,
insbesondere bezüglich des Innenwiderstandes und der
Stromentnahme, vorhanden sind. Außerdem wird dann die
mechanische Stabilität des gelförmigen Elektrolyten gefährdet, er könnte sich teilweise von den Elektroden
lösen, so daß keine definierten elektrischen Werte des
Akkumulators gewährleistet wären.

Ein Ausführungsbeispiel der Erfindung ist in der einzigen
Figur dargestellt.

Im Kunststoffgehäuse 1 des Akkumulators sind parallel
zueinander negative Gitterelektroden 2 sowie dazwischen
positive Gitterelektroden 3 dargestellt. Der Abstand
a zwischen benachbarten Elektrodenplatten beträgt bei
diesem bevorzugten Ausführungsbeispiel 15 mm. Zwischen
den Elektrodenplatten befindet sich der gelförmige
Elektrolyt.

Zusammenfassend bezieht sich die Erfindung auf einen
wartungsfreien elektrolyt- und gasdichten Bleiakkumulator
mit Elektrodengittern aus Feinblei, dispersionsgehärtetem
Blei oder einer antimonfreien Bleilegierung, sowie einem
Elektrolyt aus thixotropem Gel, bestehend aus Schwefelsäure,
ggf. auch mit Zusatz von Phosphorsäure, und einem Gelbildner, vorzugsweise Siliziumdioxid, bei dem zur Anpassung
an extreme Einsatzbedingungen, insbesondere an starke
Temperaturunterschiede und hohe Umgebungs-Dauertemperaturen,
der Plattenabstand zwischen positiven und negativen Platten
10 bis 30 mm, vorzugsweise 13 bis 16 mm beträgt.

**0049371**

Accumulatorenfabrik
Sonnenschein GmbH
Thiergarten

6470 Büdingen (Hess.) 1

Datum,
Date,   3. September 1981

Uns. Zeich,
Our ref,   Sonnen 054 EU

−7−


## Wartungsfreier, elektrolyt- und gasdichter Bleiakkumulator


### SCHUTZANSPRUCH

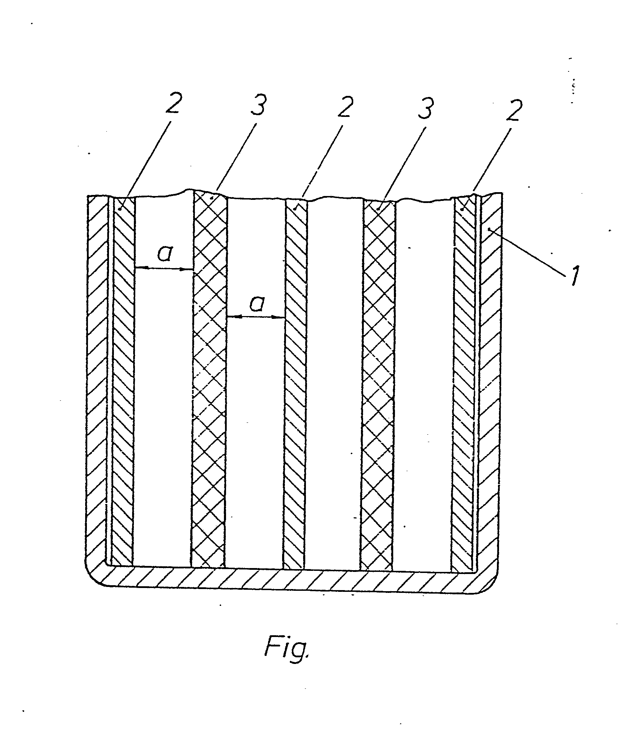

Wartungsfreier, elektrolyt- und gasdichter Bleiakkumulator mit Elektrodengittern aus Feinblei, dispersionsgehärtetem Blei oder einer antimonfreien Bleilegierung sowie einem Elektrolyt aus einem thixotropen Gel,
bestehend aus Schwefelsäure und einem Gelbildner, vorzugsweise Siliziumdioxid, sowie vorzugsweise Phosphor,
d a d u r c h   g e k e n n z e i c h n e t ,   daß der
Plattenabstand (a) zwischen benachbarten positiven und
negativen Platten 10 bis 30 mm, vorzugsweise 13 bis 16 mm,
beträgt.

0049371

Fig.